(19) Europäisches Patentamt / European Patent Office / Office européen des brevets

(11) **EP 4 099 449 A1**

(12) **EUROPEAN PATENT APPLICATION**
published in accordance with Art. 153(4) EPC

(43) Date of publication:
**07.12.2022 Bulletin 2022/49**

(21) Application number: **20916872.3**

(22) Date of filing: **09.12.2020**

(51) International Patent Classification (IPC):
*H01M 4/62* (2006.01)    *H01M 10/052* (2010.01)
*H01M 10/0562* (2010.01)    *H01B 1/06* (2006.01)
*H01B 1/08* (2006.01)

(52) Cooperative Patent Classification (CPC):
**H01B 1/06; H01B 1/08; H01M 4/62; H01M 10/052; H01M 10/0562; Y02E 60/10**

(86) International application number:
**PCT/JP2020/045750**

(87) International publication number:
**WO 2021/153018 (05.08.2021 Gazette 2021/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.01.2020 JP 2020012974**

(71) Applicant: **Panasonic Intellectual Property Management Co., Ltd.**
**Osaka-shi, Osaka 540-6207 (JP)**

(72) Inventors:
• **MIYATAKE, Kazufumi**
  **Osaka-shi, Osaka (JP)**

• **NISHIO, Yusuke**
  **Osaka-shi, Osaka (JP)**
• **KUBO, Takashi**
  **Osaka-shi, Osaka (JP)**
• **ASANO, Tetsuya**
  **Osaka-shi, Osaka (JP)**
• **SAKAI, Akihiro**
  **Osaka-shi, Osaka (JP)**

(74) Representative: **Grünecker Patent- und Rechtsanwälte**
**PartG mbB**
**Leopoldstraße 4**
**80802 München (DE)**

(54) **SOLID ELECTROLYTE MATERIAL AND BATTERY USING SAME**

(57)    The solid electrolyte material comprises Li, Y, X, O, and H, where X is one selected from the group consisting of F, Cl, Br, and I, and the molar ratio of O to Y is greater than 0.01 and less than 0.38.

FIG. 1

**Description**

Technical Field

The present disclosure relates to a solid electrolyte material and a battery using it.

Background Art

PTL 1 discloses an all solid state battery using a sulfide solid electrolyte. PTL 2 discloses a solid electrolyte material represented by a composition formula $Li_{6-3z}Y_zX_6$ (0 < z < 2 is satisfied, and X is Cl or Br).

Citation List

Patent Literature

PTL 1: Japanese Unexamined Patent Application Publication No. 2011-129312
PTL 2: International Publication No. WO 2018/025582

Summary of Invention

Technical Problem

An object of the present disclosure is to provide a solid electrolyte material having a low melting point and a high ion conductivity.

Solution to Problem

The solid electrolyte material of the present disclosure comprises Li, Y, X, O, and H, where X is one selected from the group consisting of F, Cl, Br, and I, and the molar ratio of O to Y is greater than 0.01 and less than 0.38.

Advantageous Effects of Invention

The present disclosure provides a solid electrolyte material having a low melting point and a high lithium ion conductivity.

Brief Description of Drawings

[Fig. 1] Fig. 1 shows a cross-sectional view of a battery 1000 according to a second embodiment.
[Fig. 2] Fig. 2 is a graph showing X-ray diffraction patterns of solid electrolyte materials of Examples 1 to 3 and Comparative Examples 1 and 2.
[Fig. 3] Fig. 3 is a schematic view of a compression molding dies 300 used for evaluation of the ion conductivity of a solid electrolyte material.
[Fig. 4] Fig. 4 is a graph showing a Cole-Cole chart of the impedance measurement results of the solid electrolyte material of Example 1.
[Fig. 5] Fig. 5 is a graph showing the infrared absorption spectra of the solid electrolyte materials of Examples 1 to 3 and Comparative Examples 1 and 2.
[Fig. 6] Fig. 6 is a graph showing the results of thermal analysis in Examples 1 to 3 and Comparative Example 1.
[Fig. 7] Fig. 7 is a graph showing the initial discharge characteristics of the battery of Example 1.

Description of Embodiments

Hereinafter, embodiments of the present disclosure are described with reference to the drawings.

(First embodiment)

The solid electrolyte material according to a first embodiment comprises Li, Y, X, O, and H. Here, X is one selected from the group consisting of F, Cl, Br, and I. The molar ratio of O to Y is greater than 0.01 and less than 0.38. The solid electrolyte material according to the first embodiment has a low melting point. Furthermore, the solid electrolyte material according to the first embodiment has a high lithium ion conductivity. Here, a low melting point is, for example, 504°C or less. When the solid electrolyte material is a multiphase material, the melting point of the solid electrolyte material means the highest temperature in the melting points of the solid electrolyte material. The high lithium ion conductivity is, for example, $1 \times 10^{-4}$ S/cm or more. That is, the solid electrolyte material according to the first embodiment can have, for example, a melting point of 504°C or less and an ion conductivity of $1 \times 10^{-4}$ S/cm or more.

The solid electrolyte material according to the first embodiment can be used for obtaining an all solid state battery having excellent charge and discharge characteristics. The all solid state battery may be a primary battery or a secondary battery.

The solid electrolyte material according to the first embodiment desirably does not contain sulfur. A solid electrolyte material not containing sulfur does not generate hydrogen sulfide, even if it is exposed to the atmosphere, and is therefore excellent in safety. The sulfide solid electrolyte disclosed in PTL 1 may generate hydrogen sulfide when it is exposed to the atmosphere.

The solid electrolyte material according to the first embodiment may consist of Li, Y, X, and O only.

In order to enhance the ion conductivity of the solid electrolyte material, the solid electrolyte material according to the first embodiment may further include at least one selected from the group consisting of Mg, Ca, Zn, Sr, Ba, Al, Sc, Ga, Bi, La, Zr, Hf, Ta, and Nb.

The transition metal included in the solid electrolyte material according to the present embodiment may be only Y excluding elements included as inevitable impurities.

X may be Cl. Such a solid electrolyte material has a low melting point and a high ion conductivity.

In order to enhance the ion conductivity of the solid electrolyte material, O bound to H may be present in the surface region of the solid electrolyte material according to the first embodiment.

Here, the surface region of the solid electrolyte material according to the first embodiment means the region from the surface of the solid electrolyte material to a depth of about 1 $\mu$m in the inward direction.

The X-ray diffraction pattern of the solid electrolyte material according to the first embodiment can be measured using Cu-K$\alpha$ rays. In the obtained X-ray diffraction pattern, peaks may be present in diffraction angle 2$\theta$ ranges of 15.2° or more and 16.3° or less, 17.4° or more and 18.5° or less, 30.8° or more and 31.9° or less, 33.1° or more and 34.2° or less, 40.3° or more and 41.4° or less, 48.1° or more and 49.3° or less, and 53.0° or more and 54.1° or less. Such a solid electrolyte material has a low melting point and a high ion conductivity.

In order to lower the melting point of the solid electrolyte material, the molar ratio of O to Y may be greater than 0.01 and 0.21 or less.

The shape of the solid electrolyte material according to the first embodiment is not limited. Examples of the shape are needle, spherical, and oval spherical shapes. The solid electrolyte material according to the first embodiment may be a particle. The solid electrolyte material according to the first embodiment may be formed so as to have a pellet or planar shape.

When the shape of the solid electrolyte material according to the first embodiment is a particulate shape (e.g., spherical), the solid electrolyte material according to the first embodiment may have a median diameter of 0.1 $\mu$m or more and 100 $\mu$m or less.

In order to enhance the ion conductivity of the solid electrolyte material according to the first embodiment and well disperse the solid electrolyte material according to the first embodiment and an active material, the solid electrolyte material according to the first embodiment may have a median diameter of 0.5 $\mu$m or more and 10 $\mu$m or less. In order to better disperse the solid electrolyte material according to the first embodiment and the active material, the solid electrolyte material according to the first embodiment may have a median diameter smaller than that of the active material. The median diameter means the particle diameter at which the accumulated volume in a volume-based particle size distribution is equal to 50%. The volume-based particle size distribution can be measured with a laser diffraction measurement apparatus or an image analyzer.

<Method for manufacturing solid electrolyte material>

The solid electrolyte material according to the first embodiment can be manufactured by the following method.

First, a plurality of halides as raw material powders are mixed.

As an example, when a solid electrolyte material consisting of Li, Y, Cl, O, and H is produced, a YCl$_3$ raw material powder and a LiCl raw material powder are mixed. The resulting powder mixture is heat-treated in an inert gas atmosphere with an adjusted oxygen concentration and with an adjusted moisture concentration (for example, an argon atmosphere having a dew point of -60°C or less). The heat treatment temperature may be, for example, within a range of 200°C or more and 650°C or less. The resulting reaction product is left to stand in an atmosphere having a relatively high dew point (for example, an argon atmosphere having a dew point of -30°C). The raw material powders may be mixed at a molar ratio adjusted in advance so as to offset a composition change that may occur in the synthesis process. The oxygen and hydrogen amounts in a solid electrolyte material is determined by selecting the raw material powders, the oxygen concentration in the atmosphere, the moisture concentration in the atmosphere, and the reaction time. Thus, the solid electrolyte material according to the first embodiment is obtained.

The raw material powders may be an oxide and a halide. For example, as the raw material powders, $Y_2O_3$, $NH_4Cl$, and $LiCl$ may be used.

It is inferred that the oxygen and hydrogen constituting the solid electrolyte material according to the first embodiment is incorporated from the above-mentioned atmosphere having a relatively high dew point.

(Second embodiment)

Hereinafter, a second embodiment will be described. The matters described in the first embodiment may be appropriately omitted.

The battery according to the second embodiment includes a positive electrode, a negative electrode, and an electrolyte layer. The electrolyte layer is disposed between the positive electrode and the negative electrode. At least one selected from the group consisting of the positive electrode, the electrolyte layer, and the negative electrode contains the solid electrolyte material according to the first embodiment. The battery according to the second embodiment contains the solid electrolyte material according to the first embodiment and therefore has excellent charge and discharge characteristics.

A solid electrolyte material having a low melting point is soft compared to a solid electrolyte material having a higher melting point. Accordingly, the adhesion of the interface between a solid electrolyte material and another solid electrolyte material or the interface between a solid electrolyte material and another material (for example, an active material) is improved. As a result, since the battery resistance decreases, the charge and discharge characteristics of the battery are improved. Furthermore, even if the solid electrolyte material is heat-treated with another material (for example, an active material), the occurrence of side reaction can be prevented.

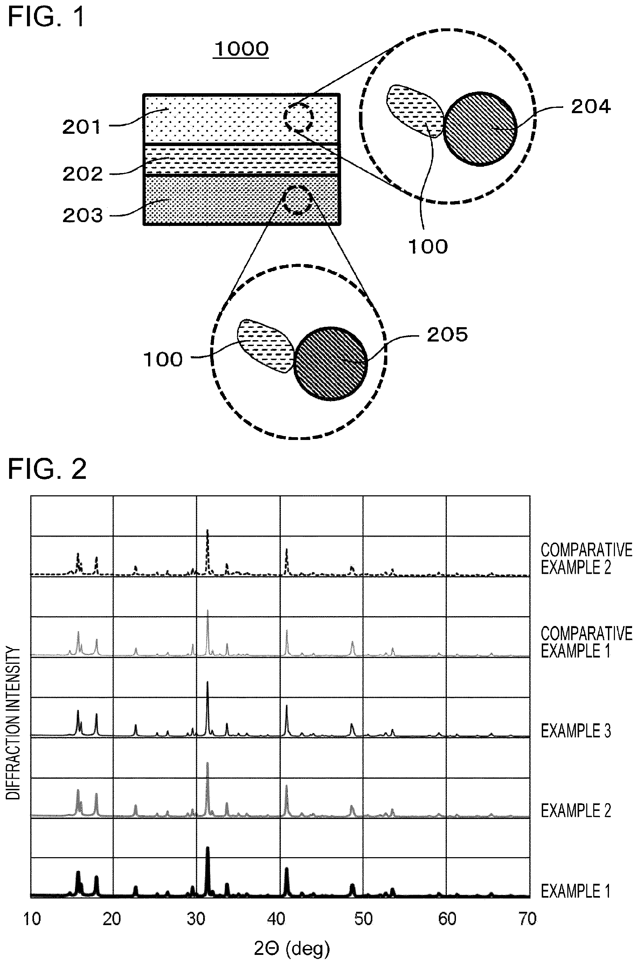

Fig. 1 shows a cross-sectional view of a battery 1000 according to the second embodiment.

The battery 1000 includes a positive electrode 201, an electrolyte layer 202, and a negative electrode 203.

The positive electrode 201 contains a positive electrode active material particle 204 and a solid electrolyte particle 100.

The electrolyte layer 202 is disposed between the positive electrode 201 and the negative electrode 203.

The electrolyte layer 202 contains an electrolyte material (for example, a solid electrolyte material).

The negative electrode 203 contains a negative electrode active material particle 205 and a solid electrolyte particle 100.

The solid electrolyte particle 100 is a particle consisting of the solid electrolyte material according to the first embodiment or a particle containing the solid electrolyte material according to the first embodiment as a main component. Here, the particle containing the solid electrolyte material according to the first embodiment as a main component means a particle in which the most abundant component is the solid electrolyte material according to the first embodiment.

The positive electrode 201 contains a material that can occlude and release metal ions (for example, lithium ions). The material is, for example, a positive electrode active material (for example, the positive electrode active material particle 204).

Examples of the positive electrode active material are a lithium-containing transition metal oxide, a transition metal fluoride, a polyanionic material, a fluorinated polyanionic material, a transition metal sulfide, a transition metal oxyfluoride, a transition metal oxysulfide, and a transition metal oxynitride. Examples of the lithium-containing transition metal oxide are $LiNi_{1-d-f}Co_dAl_fO_2$ (here, $0 < d$, $0 < f$, and $0 < (d + f) < 1$) and $LiCoO_2$.

In order to well disperse the positive electrode active material particle 204 and the solid electrolyte particle 100 in the positive electrode 201, the positive electrode active material particle 204 may have a median diameter of 0.1 $\mu$m or more. This good dispersion improves the charge and discharge characteristics of the battery 1000. In order to rapidly diffuse lithium in the positive electrode active material particle 204, the positive electrode active material particle 204 may have a median diameter of 100 $\mu$m or less. The battery 1000 can be operated at a high output due to the rapid diffusion of lithium. As described above, the positive electrode active material particle 204 may have a median diameter of 0.1 $\mu$m or more and 100 $\mu$m or less.

The positive electrode active material particle 204 may have a median diameter larger than that of the solid electrolyte particle 100 in order to well disperse the positive electrode active material particle 204 and the solid electrolyte particle 100 in the positive electrode 201.

In order to increase the energy density and output of the battery 1000, in the positive electrode 201, the ratio of the volume of the positive electrode active material particle 204 to the sum of the volume of the positive electrode active material particle 204 and the volume of the solid electrolyte particle 100 may be 0.30 or more and 0.95 or less.

In order to increase the energy density and output of the battery 1000, the positive electrode 201 may have a thickness of 10 $\mu$m or more and 500 $\mu$m or less.

The electrolyte layer 202 contains an electrolyte material. The electrolyte material may include the solid electrolyte material according to the first embodiment. The electrolyte layer 202 may be a solid electrolyte layer.

The electrolyte layer 202 may be constituted of the solid electrolyte material according to the first embodiment only. Alternatively, the electrolyte layer 202 may be constituted of only a solid electrolyte material that is different from the solid electrolyte material according to the first embodiment.

Examples of the solid electrolyte material that is different from the solid electrolyte material according to the first embodiment are $Li_2MgX'_4$, $Li_2FeX'_4$, $Li(Al,Ga,In)X'_4$, $Li_3(Al,Ga,In)X'_6$, and LiI. Here, X' is at least one selected from the group consisting of F, Cl, Br, and I.

Hereinafter, the solid electrolyte material according to the first embodiment is referred to as a first solid electrolyte material, and the solid electrolyte material that is different from the solid electrolyte material according to the first embodiment is referred to as a second solid electrolyte material.

The electrolyte layer 202 may contain not only the first solid electrolyte material but also the second solid electrolyte material according to the first embodiment. The first solid electrolyte material and the second solid electrolyte material may be uniformly dispersed. A layer made of the first solid electrolyte material and a layer made of the second solid electrolyte material may be stacked along the stacking direction of the battery 1000.

In order to prevent short circuit between the positive electrode 201 and the negative electrode 203 and to increase the output of the battery 1000, the electrolyte layer 202 may have a thickness of 1 $\mu$m or more and 100 $\mu$m or less.

The negative electrode 203 contains a material that can occlude and release metal ions (for example, lithium ions). The material is, for example, a negative electrode active material (for example, the negative electrode active material particle 205).

Examples of the negative electrode active material are a metal material, a carbon material, an oxide, a nitride, a tin compound, and a silicon compound. The metal material may be a single metal or an alloy. Examples of the metal material are a lithium metal and a lithium alloy. Examples of the carbon material are natural graphite, coke, graphitizing carbon, carbon fibers, spherical carbon, artificial graphite, and amorphous carbon. From the viewpoint of capacity density, suitable examples of the negative electrode active material are silicon (i.e., Si), tin (i.e., Sn), a silicon compound, and a tin compound.

In order to well disperse the negative electrode active material particle 205 and the solid electrolyte particle 100 in the negative electrode 203, the negative electrode active material particle 205 may have a median diameter of 0.1 $\mu$m or more. The good dispersion improves the charge and discharge characteristics of the battery. In order to rapidly disperse lithium in the negative electrode active material particle 205, the negative electrode active material particle 205 may have a median diameter of 100 $\mu$m or less. The battery can be operated at a high output due to the rapid diffusion of lithium. As described above, the negative electrode active material particle 205 may have a median diameter of 0.1 $\mu$m or more and 100 $\mu$m or less.

In order to well disperse the negative electrode active material particle 205 and the solid electrolyte particle 100 in the negative electrode 203, the negative electrode active material particle 205 may have a median diameter larger than that of the solid electrolyte particle 100.

In order to increase the energy density and output of the battery 1000, in the negative electrode 203, the ratio of the volume of the negative electrode active material particle 205 to the sum of the volume of the negative electrode active material particle 205 and the volume of the solid electrolyte particle 100 may be 0.30 or more and 0.95 or less.

In order to increase the energy density and output of the battery 1000, the negative electrode 203 may have a thickness of 10 $\mu$m or more and 500 $\mu$m or less.

In order to enhance the ion conductivity, chemical stability, and electrochemical stability, at least one selected from the group consisting of the positive electrode 201, the electrolyte layer 202, and the negative electrode 203 may contain the second solid electrolyte material.

As described above, the second solid electrolyte material may be a halide solid electrolyte. Examples of the halide solid electrolyte are $Li_2MgX'_4$, $Li_2FeX'_4$, $Li(Al,Ga,In)X'_4$, $Li_3(Al,Ga,In)X'_6$, and LiI. Here, X' is at least one selected from the group consisting of F, Cl, Br, and I.

The second solid electrolyte material may be a sulfide solid electrolyte.

Examples of the sulfide solid electrolyte are $Li_2S-P_2S_5$, $Li_2S-SiS_2$, $Li_2S-B_2S_3$, $Li_2S-GeS_2$, $Li_{3.25}Ge_{0.25}P_{0.75}S_4$, and $Li_{10}GeP_2S_{12}$.

The second solid electrolyte material may be an oxide solid electrolyte.

Examples of the oxide solid electrolyte are:

(i) an NASICON-type solid electrolyte, such as $LiTi_2(PO_4)_3$ and its element substitute;
(ii) a perovskite-type solid electrolyte, such as $(LaLi)TiO_3$;
(iii) an LISICON-type solid electrolyte, such as $Li_{14}ZnGe_4O_{16}$, $Li_4SiO_4$, $LiGeO_4$, and its element substitute;

(iv) a garnet-type solid electrolyte, such as $Li_7La_3Zr_2O_{12}$ and its element substitute; and

(v) $Li_3PO_4$ and its N-substitute.

The second solid electrolyte material may be an organic polymer solid electrolyte.

Examples of the organic polymer solid electrolyte are a polymer compound and a compound of a lithium salt. The polymer compound may have an ethylene oxide structure. A polymer compound having an ethylene oxide structure can contain a large amount of a lithium salt and can therefore further enhance the ion conductivity.

Examples of the lithium salt are LiPF6, LiBF4, LiSbF6, LiAsF6, $LiSO_3CF_3$, $LiN(SO_2CF_3)_2$, $LiN(SO_2C_2F_5)_2$, $LiN(SO_2CF_3)(SO_2C_4F_9)$, and $LiC(SO_2CF_3)_3$. One lithium salt selected from these salts may be used alone. Alternatively, a mixture of two or more lithium salts selected from these salts may be used.

At least one selected from the group consisting of the positive electrode 201, the electrolyte layer 202, and the negative electrode 203 may contain a nonaqueous electrolyte liquid, a gel electrolyte, or an ionic liquid for the purpose of facilitating the transfer of lithium ions and improving the output characteristics of the battery 1000.

The nonaqueous electrolyte liquid includes a nonaqueous solvent and a lithium salt dissolved in the nonaqueous solvent.

Examples of the nonaqueous solvent are a cyclic carbonate solvent, a chain carbonate solvent, a cyclic ether solvent, a chain ether solvent, a cyclic ester solvent, a chain ester solvent, and a fluorine solvent. Examples of the cyclic carbonate solvent are ethylene carbonate, propylene carbonate, and butylene carbonate. Examples of the chain carbonate solvent are dimethyl carbonate, ethyl methyl carbonate, and diethyl carbonate. Examples of the cyclic ether solvent are tetrahydrofuran, 1,4-dioxane, and 1,3-dioxolane. Examples of the chain ether solvent are 1,2-dimethoxyethane and 1,2-diethoxyethane. An example of the cyclic ester solvent is $\gamma$-butyrolactone. An example of the chain ester solvent is methyl acetate. Examples of the fluorine solvent are fluoroethylene carbonate, methyl fluoropropionate, fluorobenzene, fluoroethyl methyl carbonate, and fluorodimethylene carbonate.

One nonaqueous solvent selected from these solvents may be used alone. Alternatively, a mixture of two or more nonaqueous solvents selected from these solvents may be used.

Examples of the lithium salt are $LiPF_6$, $LiBF_4$, $LiSbF_6$, $LiAsF_6$, $LiSO_3CF_3$, $LiN(SO_2CF_3)_2$, $LiN(SO_2C_2F_5)_2$, $LiN(SO_2CF_3)(SO_2C_4F_9)$, and $LiC(SO_2CF_3)_3$. One lithium salt selected from these salts may be used alone. Alternatively, a mixture of two or more lithium salts selected from these salts may be used.

The concentration of the lithium salt is, for example, within a range of 0.5 mol/L or more and 2 mol/L or less.

As the gel electrolyte, a polymer material impregnated with a nonaqueous electrolyte liquid may be used. Examples of the polymer material are polyethylene oxide, polyacrylonitrile, polyvinylidene fluoride, polymethyl methacrylate, and a polymer having an ethylene oxide bond.

Examples of the cation included in the ionic liquid are:

(i) an aliphatic chain quaternary salt, such as tetraalkylammonium and tetraalkylphosphonium;

(ii) aliphatic cyclic ammonium, such as pyrrolidiniums, morpholiniums, imidazoliniums, tetrahydropyrimidiniums, piperaziniums, and piperidiniums; and

(iii) a nitrogen-containing heterocyclic aromatic cation, such as pyridiniums and imidazoliums.

Examples of the anion included in the ionic liquid are $PF_6^-$, $BF_4^-$, $SbF_6^-$, $AsF_6^-$, $SO_3CF_3^-$, $N(SO_2CF_3)_2^-$, $N(SO_2C_2F_5)_2^-$, $N(SO_2CF_3)(SO_2C_4F_9)^-$, and $C(SO_2CF_3)_3^-$.

The ionic liquid may contain a lithium salt.

At least one selected from the group consisting of the positive electrode 201, the electrolyte layer 202, and the negative electrode 203 may contain a binder for the purpose of improving the adhesion between individual particles.

Examples of the binder are polyvinylidene fluoride, polytetrafluoroethylene, polyethylene, polypropylene, an aramid resin, polyamide, polyimide, polyamideimide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinylpyrrolidone, polyether, polyether sulfone, hexafluoropolypropylene, styrene butadiene rubber, and carboxymethyl cellulose.

A copolymer may also be used as the binder. Examples of such the binder are copolymers of two or more materials selected from the group consisting of tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acid, and hexadiene. A mixture of two or more selected from these materials may be used as the binder.

At least one selected from the positive electrode 201 and the negative electrode 203 may contain a conductive assistant for the purpose of enhancing the electron conductivity.

Examples of the conductive assistant are:

(i) graphites, such as natural graphite and artificial graphite;

(ii) carbon blacks, such as acetylene black and Ketjen black;
(iii) conductive fibers, such as carbon fibers and metal fibers;
(iv) carbon fluoride;
(v) metal powders, such as aluminum;
(vi) conductive whiskers, such as zinc oxide and potassium titanate;
(vii) a conductive metal oxide, such as titanium oxide; and
(viii) a conductive polymer compound, such as polyanion, polypyrrole, and polythiophene.

In order to reduce the cost, the conductive assistant of the above (i) or (ii) may be used.

Examples of the shape of the battery according to the second embodiment are coin type, cylindrical type, square type, sheet type, button type, flat type, and stack type.

The battery according to the second embodiment may be manufactured by, for example, preparing a material for forming a positive electrode, a material for forming an electrolyte layer, and a material for forming a negative electrode, and producing a stack of a positive electrode, an electrolyte layer, and a negative electrode arranged in this order by a known method.

EXAMPLES

The present disclosure will now be described in more detail with reference to Examples.

(Example 1)

[Production of solid electrolyte material]

$YCl_3$ and LiCl were prepared as raw material powders such that the $YCl_3$ : LiCl molar ratio was 1 : 3 in an argon atmosphere having a dew point of -60°C or less and an oxygen concentration of 0.0001 vol% or less (hereinafter, referred to as "dry argon atmosphere"). These raw material powders were pulverized and mixed in a mortar. The resulting mixture was heat-treated at 550°C for 1 hour in an alumina crucible and was then pulverized in a mortar. The resulting reaction product was left to stand in an argon atmosphere having a dew point of -30°C and an oxygen concentration of 20.9 vol% for about 1 minute. Thus, a solid electrolyte material of Example 1 was obtained.

[Composition analysis of solid electrolyte material]

The contents of Li and Y per unit weight of the solid electrolyte material of Example 1 were measured with a high-frequency inductively coupled plasma emission spectrometer (iCAP7400, manufactured by Thermo Fisher Scientific, Inc.) by high-frequency inductively coupled plasma emission spectrometry. The content of Cl in the solid electrolyte material of Example 1 was measured with an ion chromatography apparatus (ICS-2000, manufactured by Dionex) by an ion chromatography method. The Li : Y : Cl molar ratio was calculated based on the contents of Li, Y, and Cl obtained from these measurement results. As a result, the solid electrolyte material of Example 1 had a Li : Y : Cl molar ratio of 2.56 : 1.0 : 4.98.

The mass proportion of O relative to the whole solid electrolyte material of Example 1 was measured with an oxygen nitrogen hydrogen analyzer (EMGA-930, manufactured by HORIBA, Ltd.) by a nondispersive infrared absorption method. As a result, the mass proportion of O was 0.24%. Based on this, the Y : O molar ratio was calculated. As a result, the solid electrolyte material of Example 1 had a Y : O molar ratio of 1.00 : 0.05.

In the composition analysis, elements of which the molar proportions relative to Y are 0.001% or less are recognized as impurities.

[Infrared spectroscopic analysis]

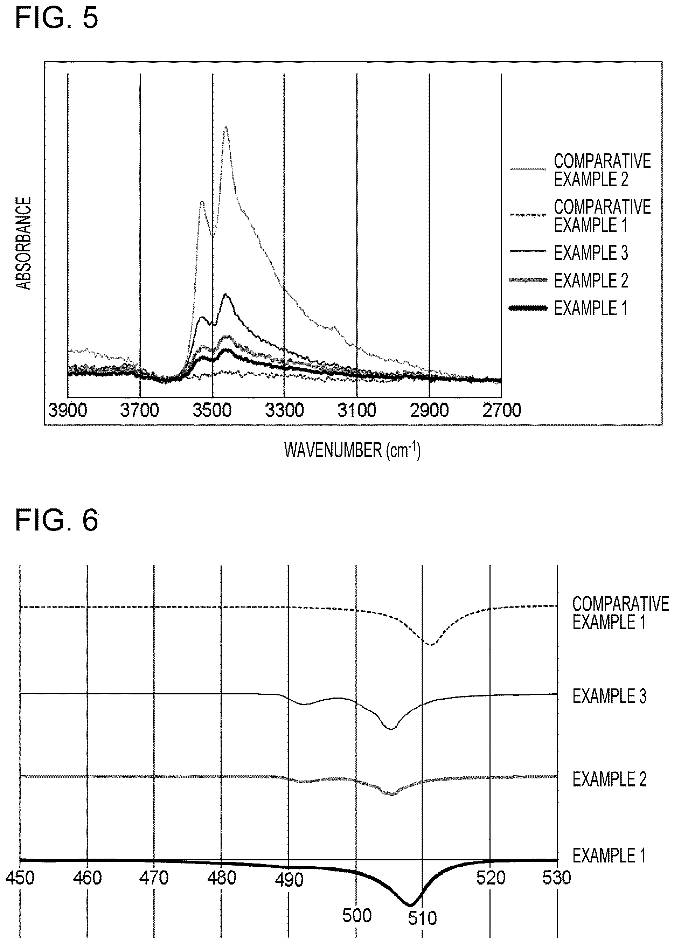

The solid electrolyte material of Example 1 was analyzed with an infrared spectrometer (ALPHA, manufactured by BRUKER Corporation) by an attenuated total reflection method. A diamond prism was used. As a result of the measurement, peaks indicating the presence of binding between a proton ($H^+$) and oxygen were detected in a region from 3100 $cm^{-1}$ to 3640 $cm^{-1}$. The surface region in the present disclosure means the thus-measured region. That is, the thickness of the surface region of the solid electrolyte material according to the first embodiment was about 1 $\mu$m from the surface of the solid electrolyte material in the inward direction. The infrared absorption spectrum of the solid electrolyte material of Example 1 is shown in the graph of Fig. 5.

[Measurement of melting point]

The melting point was measured using a thermal analyzer (Q1000, manufactured by TA Instruments). The solid electrolyte material (about 5 mg) of Example 1 was weighed in a nitrogen atmosphere and was heated from 300°C to 530°C at a temperature increase rate of 10 K/min. The endothermic peak at that time was observed. Based on the obtained data, a two-dimensional graph was created with the horizontal axis as temperature and the vertical axis as calorific value. The two points on the graph where the solid electrolyte material did not generate heat or absorb heat were connected by a straight line, and the line was used as the baseline. The intersection of the tangent at the inflection point of the endothermal peak and the baseline was defined as the melting point. As a result, the melting point was 501.1°C. The result of thermal analysis of the solid electrolyte of Example 1 is shown in the graph of Fig. 6.

[X-ray diffraction]

The crystal structure of the solid electrolyte material was analyzed with an X-ray diffractometer (MiniFlex 600, RIGAKU Corporation). The X-ray diffraction pattern of the solid electrolyte material of Example 1 was measured in a dry atmosphere having a dew point of -45°C or less. As the X-ray source, Cu-K$\alpha$ rays (wavelength: 1.5405 angstrom and 1.5444 angstrom) were used.
As the results of the X-ray diffraction measurement, there were peaks at 15.77°, 17.96°, 31.35°, 33.67°, 40.84°, 48.75°, and 53.54°. The X-ray diffraction pattern of the solid electrolyte material of Example 1 is shown in the graph of Fig. 2.

[Evaluation of ion conductivity]

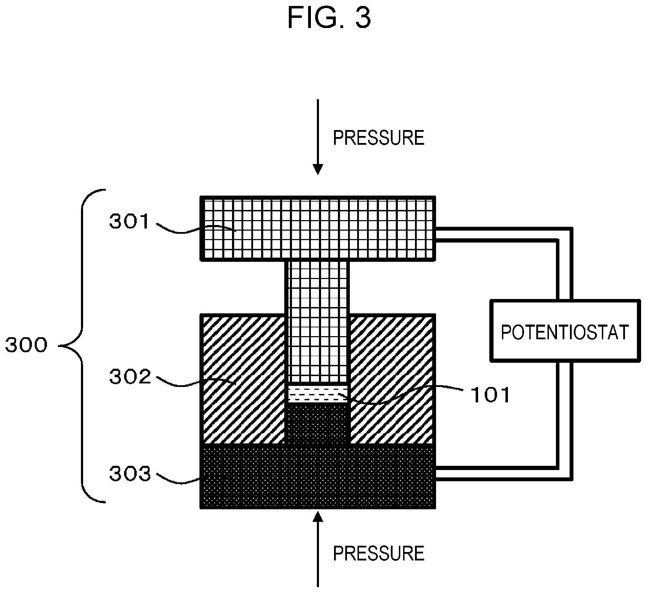

Fig. 3 is a schematic view of a compression molding dies 300 used for evaluation of the ion conductivity of a solid electrolyte material. The compression molding dies 300 included a punch upper part 301, a die 302, and a punch lower part 303. The die 302 was formed from insulating polycarbonate. The punch upper part 301 and the punch lower part 303 were both formed from electron-conductive stainless steel.
The ion conductivity of the solid electrolyte material of Example 1 was measured using the compression molding dies 300 shown in Fig. 3 by the following method.
A powder 101 of the solid electrolyte material of Example 1 was loaded in the compression molding dies 300 in a dry argon atmosphere. A pressure of 400 MPa was applied to the solid electrolyte material of Example 1 inside the compression molding dies 300 using the punch upper part 301 and the punch lower part 303.
While applying the pressure, the punch upper part 301 and the punch lower part 303 were connected to a potentiostat (VersaSTAT4, Princeton Applied Research). The punch upper part 301 was connected to the working electrode and the potential measurement terminal. The punch lower part 303 was connected to the counter electrode and the reference electrode. The impedance of the solid electrolyte material of Example 1 was measured by an electrochemical impedance measurement method at room temperature.

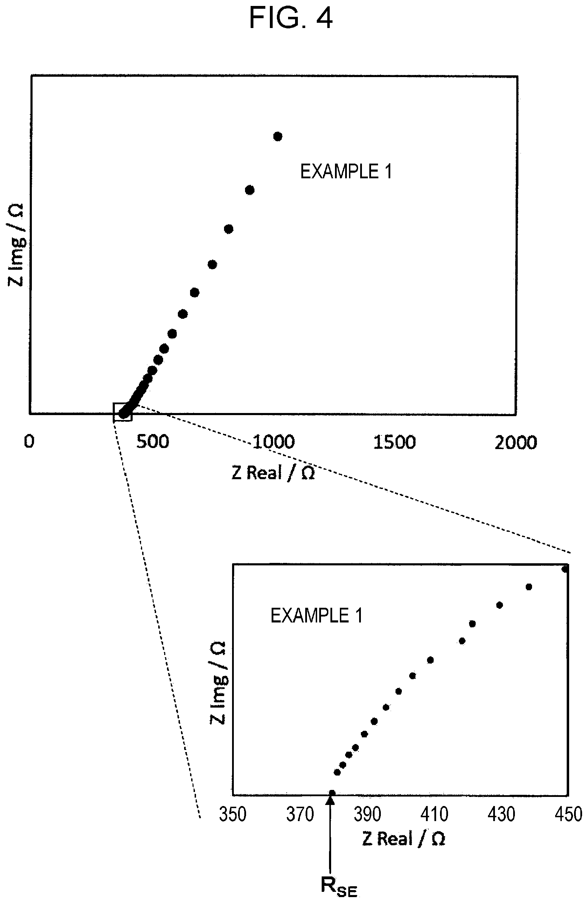

Fig. 4 is a graph showing a Cole-Cole chart of the impedance measurement results of the solid electrolyte material of Example 1.
In Fig. 4, the real value of impedance at the measurement point where the absolute value of the phase of the complex impedance was the smallest was regarded as the resistance value of the solid electrolyte material to ion conduction. Regarding the real value, see the arrow $R_{SE}$ shown in Fig. 4. The ion conductivity was calculated using the resistance value based on the following mathematical expression (1):

$$\sigma = (R_{SE} \times S/t)^{-1} \quad (1).$$

Here, $\sigma$ represents ion conductivity; S represents the contact area of a solid electrolyte material with the punch upper part 303 (equal to the cross-sectional area of the hollow part of the die 301 in Fig. 3); $R_{SE}$ represents the resistance value of the solid electrolyte material in impedance measurement; and t represents the thickness of the solid electrolyte material applied with a pressure (equal to the thickness of the layer formed from the powder 101 of the solid electrolyte material in Fig. 3).
The ion conductivity of the solid electrolyte material of Example 1 measured at 25°C was $1.8 \times 10^{-4}$ S/cm.

[Production of battery]

The solid electrolyte material of Example 1 and $LiCoO_2$ as an active material were prepared at a volume ratio of 70 : 30 in a dry argon atmosphere. These materials were mixed in an agate mortar. Thus, a mixture was obtained.
The solid electrolyte material (100 mg) of Example 1, the above mixture (10.0 mg), and an aluminum powder (14.7 mg) were stacked in this order in an insulating tube having an inner diameter of 9.5 mm. A pressure of 300 MPa was applied to this stack to form a first electrode and a solid electrolyte layer. The solid electrolyte layer had a thickness of 500 $\mu$m.

Subsequently, metal In foil was stacked on the solid electrolyte layer. The solid electrolyte layer was sandwiched between the metal In foil and the first electrode. The metal In foil had a thickness of 200 $\mu$m. Subsequently, a pressure of 80 MPa was applied to the metal In foil to form a second electrode.

A current collector made of stainless steel was attached to the first electrode and the second electrode, and current collecting lead was then attached to the current collector. Finally, the inside of the insulating tube was isolated from the outside atmosphere using an insulating ferrule to seal the inside of the tube. Thus, a battery of Example 1 was obtained.

[Charge and discharge test]

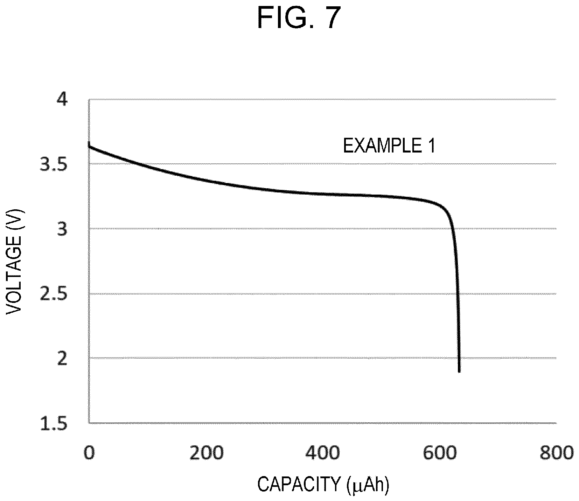

Fig. 7 is a graph showing the initial discharge characteristics of the battery of Example 1. The results shown in Fig. 7 were measured by the following method.

The battery of Example 1 was placed in a thermostat of 25°C. The battery of Example 1 was charged with a current density of 84 $\mu$A/cm$^2$ until the voltage reached 3.7 V. The current density corresponded to 0.05 C rate. Subsequently, the battery of Example 1 was discharged similarly at a current density of 84 $\mu$A/cm$^2$ until the voltage reached 1.9 V.

As the results of the charge and discharge test, the battery of Example 1 had an initial discharge capacity of 632 $\mu$Ah.

(Examples 2 and 3)

A solid electrolyte material of Example 2 was obtained as in Example 1 except that the time during which the reaction product was left to stand in an atmosphere having a dew point of -30°C was set to about 3 minutes instead of about 1 minute.

A solid electrolyte material of Example 3 was obtained as in Example 1 except that the time during which the reaction product was left to stand in an atmosphere having a dew point of -30°C was set to about 10 minutes instead of about 1 minute.

The element ratio (molar ratio), melting point, oxygen amount, infrared absorption spectrum, X-ray diffraction, and ion conductivity of each of the solid electrolyte materials of Examples 2 and 3 were measured as in Example 1. The measurement results are shown in Tables 1 and 2. The X-ray diffraction patterns of the solid electrolyte materials of Examples 2 and 3 are shown in the graph of Fig. 2. The infrared absorption spectra of the solid electrolyte materials of Examples 2 and 3 are shown in Fig. 5. The results of thermal analysis of the solid electrolyte materials of Examples 2 and 3 are shown in the graph of Fig. 6.

Batteries of Examples 2 and 3 were obtained as in Example 1 using the solid electrolyte materials of Examples 2 and 3.

The charge and discharge test was implemented as in Example 1 using the batteries of Examples 2 and 3. The batteries of Examples 2 and 3 were well charged and discharged as in the battery of Example 1.

(Comparative Examples 1 and 2)

In a dry argon atmosphere, YCl$_3$ and LiCl were prepared as raw material powders such that the YCl$_3$ : LiCl molar ratio was 1 : 3. These raw material powders were pulverized and mixed in a mortar. The resulting mixture was heat-treated at 550°C for 1 hour in an alumina crucible and was then pulverized in a mortar. Thus, a solid electrolyte material of Comparative Example 1 was obtained.

A solid electrolyte material of Example 2 was obtained as in Example 1 except that the time during which the reaction product was left to stand in an atmosphere having a dew point of -30°C was set to about 30 minutes instead of about 1 minute.

The element ratio (molar ratio), melting point, oxygen amount, infrared absorption spectrum, X-ray diffraction, and ion conductivity of each of the solid electrolyte materials of Comparative Examples 1 and 2 were measured as in Example 1. The measurement results are shown in Tables 1 and 2. The X-ray diffraction patterns of the solid electrolyte materials of Comparative Examples 1 and 2 are shown in the graph of Fig. 2. The infrared absorption spectra of the solid electrolyte materials of Comparative Examples 1 and 2 are shown in the graph of Fig. 5. The result of the thermal analysis of the solid electrolyte material of Comparative Example 1 is shown in the graph of Fig. 6.

[Table 1]

| | Element ratio (molar ratio) | | | | Melting point (°C) | Ion conductivity (S/cm) |
|---|---|---|---|---|---|---|
| | Li | Y | Cl | O | | |
| Example 1 | 2.56 | 1.00 | 4.98 | 0.05 | 501.1 | $1.8 \times 10^{-4}$ |
| Example 2 | 2.58 | 1.00 | 5.48 | 0.17 | 494.3 | $1.4 \times 10^{-4}$ |
| Example 3 | 2.57 | 1.00 | 4.36 | 0.21 | 490.7 | $1.2 \times 10^{-4}$ |
| Comparative Example 1 | 2.59 | 1.00 | 5.07 | 0.01 | 504.6 | $2.4 \times 10^{-4}$ |
| Comparative Example 2 | 2.58 | 1.00 | 5.24 | 0.38 | 412.5 | $2.7 \times 10^{-7}$ |

[Table 2]

| | X-ray diffraction peak angle (diffraction angle $2\theta$) | | | | | | |
|---|---|---|---|---|---|---|---|
| Example 1 | 15.77° | 17.96° | 31.35° | 33.67° | 40.84° | 48.75° | 53.54° |
| Example 2 | 15.76° | 17.98° | 31.33° | 33.66° | 40.83° | 48.64° | 53.51° |
| Example 3 | 15.77° | 17.99° | 31.33° | 33.66° | 40.85° | 48.64° | 53.53° |
| Comparative Example 1 | 15.82° | 18.01° | 31.36° | 33.69° | 40.87° | 48.76° | 53.57° |
| Comparative Example 2 | 15.77° | 17.99° | 31.33° | 33.37° | 40.84° | 48.66° | 53.55° |

(Consideration)

As obvious from Table 1, the solid electrolyte materials of Examples 1 to 3 have melting points lower than that of the solid electrolyte material of Comparative Example 1. Furthermore, the solid electrolyte materials of Examples 1 to 3 each have a high ion conductivity of $1 \times 10^{-4}$ S/cm or more at around room temperature. In contrast, the solid electrolyte material of Comparative Example 2 has an ion conductivity of less than $1 \times 10^{-4}$ S/cm.

As obvious from Table 1, when the molar ratio of O to Y is greater than 0.01 and 0.21 or less, the solid electrolyte material has a low melting point and a high ion conductivity. It was confirmed that the melting point of a solid electrolyte material decreases with an increase in the molar ratio of O to Y.

It was confirmed from Fig. 5 that the solid electrolyte materials of Examples 1 to 3 and Comparative Example 2 have oxygen binding to protons. In contrast, it was confirmed that the solid electrolyte material of Comparative Example 1 does not have oxygen binding to protons. That is, it is inferred that the solid electrolyte material of Comparative Example 1 does not include hydrogen. It is inferred that oxygen binding to protons is present as a hydroxy group or hydrated water.

The batteries according to Examples 1 to 3 were charged and discharged at 25°C.

Since the solid electrolyte materials of Examples 1 to 3 do not contain sulfur, hydrogen sulfide does not occur.

As described above, the solid electrolyte material of the present disclosure has a low melting point and a high lithium ion conductivity and is suitable for providing a battery that can be well charged and discharged.

Industrial Applicability

The solid electrolyte material of the present disclosure is used in, for example, an all solid lithium ion secondary battery.

Reference Signs List

| | |
|---|---|
| 100 | solid electrolyte particle |
| 101 | powder of solid electrolyte material |
| 201 | positive electrode |
| 202 | electrolyte layer |
| 203 | negative electrode |
| 204 | positive electrode active material particle |

205     negative electrode active material particle
300     compression molding dies
301     punch upper part
302     die
303     punch lower part
1000    battery

**Claims**

1.  A solid electrolyte material comprising Li, Y, X, O, and H, wherein

    X is at least one selected from the group consisting of F, Cl, Br, and I, and
    a molar ratio of O to Y is greater than 0.01 and less than 0.38.

2.  The solid electrolyte material according to claim 1, wherein
    X is Cl.

3.  The solid electrolyte material according to claim 1 or 2, further comprising:
    at least one selected from the group consisting of Mg, Ca, Zn, Sr, Ba, Al, Sc, Ga, Bi, La, Zr, Hf, Ta, and Nb.

4.  The solid electrolyte material according to any one of claims 1 to 3, wherein
    O binding to H is present in a surface region of the solid electrolyte material.

5.  The solid electrolyte material according to any one of claims 1 to 4, wherein
    an X-ray diffraction pattern obtained by X-ray diffraction measurement using Cu-K$\alpha$ has peaks in ranges of diffraction angle $2\theta$ of 15.2° or more and 16.3° or less, 17.4° or more and 18.5° or less, 30.8° or more and 31.9° or less, 33.1° or more and 34.2° or less, 40.3° or more and 41.4° or less, 48.1° or more and 49.3° or less, and 53.0° or more and 54.1° or less.

6.  The solid electrolyte material according to any one of claims 1 to 5, wherein
    a molar ratio of O to Y is greater than 0.01 and 0.21 or less.

7.  A battery comprising:

    a positive electrode;
    a negative electrode; and
    an electrolyte layer disposed between the positive electrode and the negative electrode, wherein
    at least one selected from the group consisting of the positive electrode, the negative electrode, and the electrolyte layer contains the solid electrolyte material according to any one of claims 1 to 6.

# FIG. 1

# FIG. 2

# FIG. 3

# FIG. 4

## FIG. 5

## FIG. 6

# FIG. 7

**INTERNATIONAL SEARCH REPORT**

| International application No. |
| --- |
| PCT/JP2020/045750 |

A. CLASSIFICATION OF SUBJECT MATTER
Int.Cl. H01M4/62(2006.01)i, H01M10/052(2010.01)i, H01M10/0562(2010.01)i,
H01B1/06(2006.01)i, H01B1/08(2006.01)i
FI: H01B1/06A, H01M4/62Z, H01B1/08, H01M10/0562, H01M10/052
According to International Patent Classification (IPC) or to both national classification and IPC

B. FIELDS SEARCHED

Minimum documentation searched (classification system followed by classification symbols)
Int.Cl. H01M4/62, H01M10/052, H01M10/0562, H01B1/06, H01B1/08

Documentation searched other than minimum documentation to the extent that such documents are included in the fields searched
Published examined utility model applications of Japan      1922-1996
Published unexamined utility model applications of Japan    1971-2021
Registered utility model specifications of Japan            1996-2021
Published registered utility model applications of Japan    1994-2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2012-96940 A (TOYOTA CENTRAL R&D LABS., INC.) 24 May 2012 (2012-05-24), entire text, all drawings | 1-7 |
| A | WO 2018/025582 A1 (PANASONIC INTELLECTUAL PROPERTY MANAGEMENT CO., LTD.) 08 February 2018 (2018-02-08), entire text, all drawings | 1-7 |
| A | WO 2019/146308 A1 (PANASONIC INTELLECTUAL PROPERTY MANAGEMENT CO., LTD.) 01 August 2019 (2019-08-01), entire text, all drawings | 1-7 |

☐ Further documents are listed in the continuation of Box C.  ☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 18 January 2021 | 26 January 2021 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

<table>
<tr><td colspan="2" align="center">**INTERNATIONAL SEARCH REPORT**<br>Information on patent family members</td><td>International application No.<br>PCT/JP2020/045750</td></tr>
</table>

```
JP 2012-96940 A    24 May 2012        (Family: none)

WO 2018/025582 A1  08 February 2018   US 2019/0088995 A1
                                      entire text, all drawings

WO 2019/146308 A1  01 August 2019     CN 111201643 A
                                      entire text, all drawings
```

Form PCT/ISA/210 (patent family annex) (January 2015)

**EP 4 099 449 A1**

**REFERENCES CITED IN THE DESCRIPTION**

**Patent documents cited in the description**

- JP 2011129312 A

- WO 2018025582 A